Europäisches Patentamt

European Patent Office

Office européen des brevets

(11) Veröffentlichungsnummer: **0 237 882**

**A2**

(12) **EUROPÄISCHE PATENTANMELDUNG**

(21) Anmeldenummer: 87103183.7

(22) Anmeldetag: 06.03.87

(51) Int. Cl.⁴: **G01N 29/04**

(30) Priorität: 19.03.86 DE 3609223

(43) Veröffentlichungstag der Anmeldung:
23.09.87 Patentblatt 87/39

(84) Benannte Vertragsstaaten:
AT BE CH DE ES FR GB GR IT LI LU NL SE

(71) Anmelder: INTERATOM Gesellschaft mit
beschränkter Haftung
Friedrich-Ebert-Strasse
D-5060 Bergisch Gladbach 1(DE)

(72) Erfinder: Fortmann, Manfred, Dipl.-Ing.
Christian-Heesen-Strasse 17
D-5063 Overath(DE)
Erfinder: Vellen, Hans-Leo, Dipl.-Ing.
Am Hähnchen 8
D-5372 Schleiden(DE)

(74) Vertreter: Mehl, Ernst, Dipl.-Ing. et al
Postfach 22 01 76
D-8000 München 22(DE)

(54) **Verfahren zur Langzeitüberwachung von metallischen Bauteilen mittels Ultraschall.**

(57) Zur betriebsbegleitenden Langzeitüberwachung von Bauteilen (1) mittels eines Ultraschallprüfgerätes (3) wird vorgeschlagen, eine definierte Fehlstelle (4) (z. B. in Form einer im Koppelkörper (2) angebrachten Bohrung) vorzusehen. Das von dieser über die Zeit unveränderlichen Fehlstelle zurückgeworfene Echo (12) wird in Beziehung gesetzt zu den Echos (14), die von Fehlstellen (5) im Bauteil herrühren. Solange das Verhältnis der Echos (12) und (14) bei verschiedenen Frequenzen zueinander unverändert bleibt, findet kein Anwachsen der Fehlstellen (z. B. Haarrisse) statt, und das Bauteil kann nach wie vor weiterverwendet werden. Das Verfahren ist unempfindlich gegen Änderungen in der absoluten Stärke der Echos infolge der Alterung der Meßinstrumente oder infolge sich verändernder Ankoppelung.

FIG 1

FIG 2

# Verfahren zur Langzeitüberwachung von metallischen Bauteilen mittels Ultraschall

Die vorliegende Erfindung betrifft ein Verfahren nach dem Oberbegriff des 1. Anspruchs. Als Verfahren zur zerstörungsfreien Werkstoffprüfung ist das Ultraschallverfahren bekannt, bei dem Ultraschallwellen in das zu prüfende Bauteil mittels eines Senders eingeleitet werden; die Wellen werden an Fehlstellen reflektiert und zu einem Empfänger zurückgeworfen. Dabei wird der Sender meist mittels eines Koppelstückes in unmittelbaren Kontakt mit dem zu prüfenden Bauteil gebracht und nach Beendigung der Prüfung, d. h. nach Feststellung des Ist-Zustandes wieder entfernt. Üblicherweise werden bei der Ultraschallprüfung die im Bereich der Korngrenzen auftretenden Echos, das sog. Gefügerauschen, unterdrückt.

In Anlagen, die erhöhten Sicherheitsanforderungen genügen müssen, wie z. B. in Kernenergieanlagen, besteht das Bedürfnis nach einer betriebsbegleitenden Überwachung wichtiger Bauteile, um sicherzustellen, daß sich anbahnende Schäden in ihnen rechtzeitig, d. h. vor ihrem Eintreten erkannt werden. Hierbei kann es sich z. B. um Haarrisse handeln, die sich zwischen zwei in herkömmlicher Weise durchgeführten Ultraschallprüfungen unerkannt zu größeren, die Integrität des Bauteiles gefährdenden Fehlstellen entwickeln. Andererseits muß nicht jeder Haarriss diese Entwicklung nehmen; sein Vorhandensein kann toleriert (und ein Auswechseln des Bauteils vermieden) werden, wenn eine Vergrößerung desselben nicht zu erwarten ist und diese Immutanz überprüft werden kann. Dieser Gesichtspunkt ist für Kernenergieanlagen besonders wichtig, da wegen der dort gegebenen nur beschränkten Prüf-und Reparaturmöglichkeiten eine fehlerfreie Funk tion der Bauteile über die gesamte Lebensdauer der Anlage (z. B. von 30 Jahren) angestrebt wird Bislang sind zur Dauerüberwachung gefährdeter Bauteile z. B. Dehnmeßstreifen verwendet worden, mit deren Hilfe etwaige Formänderungen festgestellt werden können; wenn diese eintreten, ist die Schädigung des Bauteiles schon verhältnismäßig weit fortgeschritten.

Aufgabe der vorliegenden Erfindung ist ein Verfahren, mit dessen Hilfe sich eine ständige Überwachung von Bauteilen beliebiger Bauwerke oder Anlagen auf das Vorhandensein und gegebenenfalls das Anwachsen von Gefügeschäden durchführen läßt, insbesondere von nur beschränkt zugänglichen Bauteilen mittels des an sich bekannten Ultraschallprüfverfahrens.

Die Lösung dieser Aufgabe erfolgt durch die im kennzeichnenden Teil des 1. Anspruchs angegebenen Schritte. Über die Zeit ändert sich unvermeidlicherweise das von einer Fehlstelle zurückgeworfene Echo. Dank des hier vorgeschlagenen Vergleichs dieses Echos mit einem solchen, das von einer definierten Fehlstelle herrührt, kann nunmehr festgestellt werden, ob die Änderung des Nutzsignales auf ein Anwachsen der Fehlstelle zurückzuführen ist, oder auf altersbedingteÄnderungen in der Leistungsfähigkeit der Meßinstrumente (in Kernenergieanlagen ist . hier ihre Beeinträchtigung durch Neutronenstrahlung zu beachten), bzw auf Veränderungen in der Qualität der akustischen Ankoppelung zwischen Bauteil und Meßgerät zurückzuführen ist. Mit dem Verfahren können durch Beanspruchungen im Kriechbereich hervorgerufene Korngrenzenaufweitungen verfolgt werden.

Zur Absicherung des unveränderlichen Verhältnisses der Echos der definierten zu den "natürlichen" Fehlstellen kann entsprechend dem Vorschlag im 2. Anspruch die Messung bei verschiedenen Schallfrequenzen wiederholt werden.

Mit der im 3. Anspruch vorgeschlagenen Ausgestaltung des Erfindungsgedankens ist zugleich die einfachste Art seiner Ausführung gekennzeichnet.

Eine beispielsweise Anwendung der Erfindung ist in der Zeichnung erläutert und zwar zeigt:

Fig. 1 eine zur Durchführung des Verfahrens geeignete Anordnung,

Fig. 2 die bei Durchführung des Verfahrens mittels dieser Anordnung zu erwartende Anzeige des Ultraschallmeßgerätes und

Fig. 3 ein Diagramm, anhand dessen eine Veränderung im Gefügezustand bewertet werden kann.

An einem beliebigen, auf Dauer zu überwachenden Bauteil 1 liegt in bekannter Weise ein Koppelkörper 2 an, über den die von einem Prüfkopf 3 eines Ultraschallgerätes ausgehenden Wellen in das Bauteil 1 eingeleitet werden. Auf die Darstellung der weiteren Teile des Ultraschallmeßgerätes wurde, da für das Verständnis der Erfindung unerheblich, verzichtet. Der Koppelkörper 2 ist mit einer Fehlstelle 4 definierter und über die Zeit unveränderlicher Größe versehen; in ihrer einfachsten hier dargestellten Form handelt es sich dabei um eine Bohrung. Von beliebigen Fehlstellen 5, z. B. Haarrissen im Bauteil 1 werden, wie durch die Pfeile angedeutet, die in einem Schallfeld 6 ausgesandten Schallwellen zum Prüfkopf 3 zurückgeworfen. Die Gebrauchsfähigkeit und Sicherheit des Bauteiles 1 sind durch die Haarrisse 5 nicht gefährdet, solange diese kein Anwachsen zeigen.

Auf dem Oszilloskopen des Ultraschallmeßgerätes wird sowohl ein Sendeimpuls 11 sichtbar als auch das von der Bohrung 4 zurückgeworfene erste Echo 12. Ferner ist ein Oberflächenecho 13 des Bauteiles 1 sichtbar und mehrere weitere Echos 14, die auf die Fehlstellen 5 zurückgehen. Die Höhe der Echoimpulse kann sich über die Zeit ändern; solange jedoch die Differenz der Höhen des Bohrungsechos 12 und der Fehlstellenechos 14 (und dieser untereinander) konstant bleibt, liegt kein Wachsen der Fehlstellen vor und das Bauteil 1 kann unbedenklich weiter für seinen Zweck eingesetzt werden.

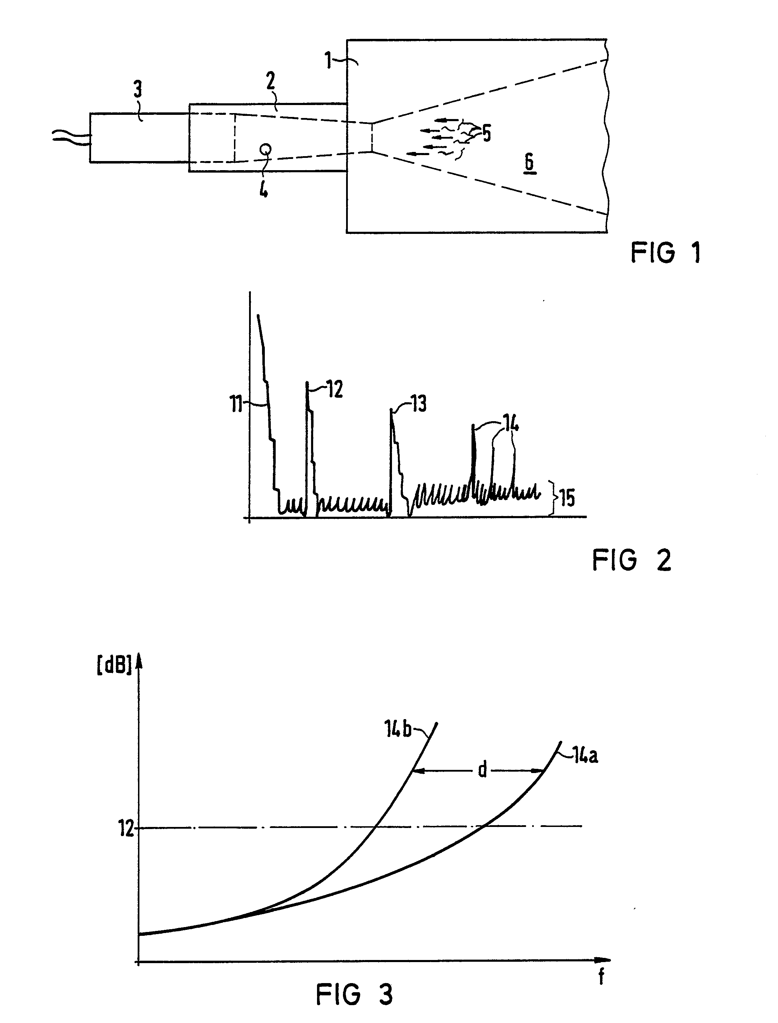

Im Diagramm der Figur 3 ist das Verhältnis zwischen dem in der Figur 2 mit 15 bezeichneten "Rauschen" der Anzeige und dem durch die Bohrung 4 erzeugten Echosignal über der Prüffrequenz aufgetragen. Schallwellen niedriger Frequenz werden nur durch große Fehlstellen reflektiert; mit zunehmender Frequenz erzeugen immer kleinere Ungänzen Echos. Bei zunehmender Bauteilschädigung verschiebt sich der relative Rauschpegel der Struktur verglichen zur Referenzbohrung zu niedrigeren Frequenzen. Mit 14a und 14b bezeichnet sind die entsprechenden, von den Fehlstellen 5 am Anfang (a) bzw. am Ende (b) des Überwachungszeitraumes zurückgeworfenen Echos eingetragen. Die Differenzstrecke d gibt dann ein Maß für die während dieses Zeitraumes eingetretene weitere Gefügeschädigung.

**Ansprüche**

1. Verfahren zur Langzeitüberwachung von metallischen Bauteilen (1) mittels Ultraschall,
**dadurch gekennzeichnet,**
daß die von etwaigen Fehlstellen (5) im Bauteil (1) herrührenden Echos (14) ständig in Bezug zu dem Echo (11) gesetzt werden, das von einer definierten über die Zeit unveränderlichen Fehlstelle (4) zurückgeworfen wird.

2. Verfahren nach Anspruch 1,
**dadurch gekennzeichnet,**
daß Messungen in verschiedenen Frequenzbereichen vorgenommen werden.

3. Verfahren nach Anspruch 1 oder 2 unter Benutzung eines zwischen Ultraschallprüfkopf (3) und Bauteil (1) eingeschobenen Koppelkörpers (2),
**dadurch gekennzeichnet,**
daß die definierte Fehlstelle die Form einer im Koppelkörper (2) angelegten Ausnehmung oder Bohrung (4) hat.

FIG 1

FIG 2

FIG 3